# EUROPEAN PATENT APPLICATION

(11) **EP 2 075 989 A1**
(43) Date of publication of application: **01.07.2009**
(21) Application number: 08102946.4
(22) Date of filing: 26.03.2008
(51) Int. Cl.: H04L 29/08

(54) **Method and apparatus for optimizing presentation of media content on a wireless device based on user behaviour**

(30) Priority: 24.12.2007 US 963893
(71) Applicant: Qualcomm Incorporated, San Diego, CA 92121-1714 (US)
(72) Inventor: Kies, Jonathon K., Encinitas, CA 92024 (US); Kerger, Kameron, San Diego, CA 92104 (US); Tartz, Robert S., Escondido, CA 92029 (US)
(74) Representative: Copp, David Christopher

(57) **Abstract**

Methods, apparatus, systems, and computer program products are presented for optimizing the presentation of media content, such as advertising content, on a wireless device. The present aspects provide for determining, at the wireless device, which media content to present based on historical user usage behaviour stored locally on the wireless device. In this regard, the described methods, apparatus, and systems are completely wireless device-based and, as such, do not require for back-end servers or other network devices to intervene in deciding what media content should be communicated to the wireless device and/or presented on the wireless device. Therefore, the present aspects provide for a simple and cost effective approach to targeted media content presentation that additionally affords the wireless device user a level of privacy.

## Description

### BACKGROUND

### Field

The disclosed aspects relate to wireless communication devices, and more particularly, to systems, methods, and apparatus for optimizing the presentation of media content, specifically advertising content, on a wireless device based on user behaviour.

### Background

Communication networks have been designed to deliver media content to recipients. For example, communication networks may comprise a broadcast or multicast system, which transmit information to multiple recipients at the same time. Specifically, these types of communication networks are especially suited for delivering advertising media content, otherwise referred to as advertisements or ads, to wireless communication devices, such as cellular telephones and the like.

The wireless devices receiving advertising content may have applications/clients that provide for displaying advertising content, in what is referred to as a banner ad, throughout the application/client. For example, purchasing or shopping clients that provide for the user to navigate a set of purchasable content, such as audio/video shopping clients, gaming application shopping clients, ring tone or wallpaper shopping clients or the like, can be configured with designated areas for displaying banner ads. In many communication networks, advertisements may be delivered to the wireless devices in a bundled format, meaning the wireless device may receive multiple advertisements in a single delivery communication. The application requiring advertisements may be configured to have the wireless device periodically check with the network for new advertisements. Alternatively, the network may send a communication, such as a Short Message Service (SMS) communication, to the wireless device to trigger the device to "wake-up" to receive broadcasted advertising content.

In media content delivery, especially advertising content, the service providers are highly interested in providing targeted media content to users of wireless devices. Targeted, in that, the media content, such as advertisements, delivered to a wireless device and presented thereon, are advertisements for which the user has an interest. For example, in the case of advertising, the user may have shown a desire to purchase similar products to those which are being advertised. However, in the "one-to-many" broadcast or multicast delivery formats, media content, such as advertisement, may be randomly sent to wireless devices without any knowledge of the user's interests or usage behaviour. Upon wireless device receipt, the application providing for media content insertion, such as banner ads, can either randomly display media content items or can provide for a rotated schedule for displaying the media content items.

Innovations may have been made to provide for more targeted media content delivery. Such targeted media content delivery has, in many instances, involved the service provider acquiring user profile data and/or user usage behaviour at a back-end network device, such as content provider server, and analyzing the user profile and/or usage behaviour to determine which media content/advertisements can be targeted for the user of the wireless device. The targeted media content is then bundled and sent to the wireless device. However, this type of targeted media content can be complex, in terms of communication requirements, in that it may require multiple and persistent communications from the wireless device to the server to accumulate and update the user profile and/or usage behaviour files. Additionally, this type of targeted media content delivery can be costly in that it may require additional software, a large amount of back-end servers to store user profiles and/or usage behaviour files, and use of more network resources for delivering the targeted content either by broadcast, multicast, or unicast delivery mechanisms. In addition to complexity and cost concerns, privacy issues may also be of concern because users of wireless devices may not desire to have the content service providers maintain active profiles of the users and/or the users' usage behaviour.

In addition, to provide targeted media content to wireless devices or other communication devices, content providers have also relied on user profile data and user behaviour data to tailor other aspects of the user's experience when the user is using a given application, network service, or the like. However, in these instances, similar to the targeted media content, the content provider can acquire and store user profiles and/or usage behaviour at a network server, analyze the user profile and/or usage behaviour data to determine how to tailor the user's experience and, subsequently can tailor the user's experience via communication with the user's device. Thus, this type of back-end tailoring of the user's experience can also be complex and costly, and can also raise privacy issues.

Therefore, a need exists to develop a method for targeting, otherwise referred to as optimizing, the presentation of delivered media content on a wireless communication device. The desired methods, apparatus, and systems should provide for media content targeting/optimization without the need to provide user profile and user behaviour data to the content service providers or any other network entity. As such, the desired system should be relatively less complex and costly and provide a level of privacy to the wireless device user. In addition to optimizing the presentation of media content, a need exists to develop a method for tailoring a user's experience for a given application/client, network service or the like without the need to provide user profiles and user behaviour data to the content service providers or any other network entity.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented infra.

Thus, present aspects provide systems, methods, and apparatus for optimizing the presentation of media content, in particular advertising content, on wireless communication devices. The aspects herein presented are implemented by wireless device-side clients/applications and, therefore may not require the assistance of network devices or content providers to acquire and store user profiles and/or usage behaviour data to determine which media content should be targeted for a given wireless device. According to one or more of the present aspects, user profiles that monitor and track user behaviour are captured and stored at the wireless devices. The wireless device receives a broadcast/multicast communication or the like that includes a plurality of non-targeted, generic media content. The wireless device uses the user profile and, specifically, the usage behaviour data to determine which media content items from the plurality of media content to present. The usage behaviour data may be relied on to determine a frequency of presentation, a schedule of presentation, a strategic placement of the media content with a given client/application or the like. The wireless device-side clients/applications herein disclosed benefit from being limited in terms of computations needed to determine which media content to present on the wireless device. As such, the wireless device-side clients can especially be suited for wireless devices that may have slower processing capabilities.

According to one aspect, a method for optimizing the presentation of media content on a wireless communication device is provided. The method includes receiving a plurality of media content having metadata associated with one or more media content categories. The method additionally includes capturing usage behaviour data on the wireless device and storing the usage behaviour data in a user profile that includes a general usage behaviour profile and one or more activity-specific usage behaviour sub-profiles. The method also includes three stages of selecting media content for presentation. First media content is selected for presentation from the plurality of media content randomly or based on an even distribution cycle/schedule until a predetermined threshold of usage behaviour data is captured and stored in the user profile. Second media content is selected for presentation from the plurality of media content if the predetermined threshold is met and a user is currently engaged in a generic, non-activity-specific related use. The second media content is further selected based on the general usage behaviour profile. Third media content is selected for presentation from the plurality of media content if the predetermined threshold is met and a user is currently engaged in an activity-specific related us. The third media content is further selected based on one of the one or more activity-specific usage behaviour sub-profiles.

In one or more aspects of the method the usage behaviour data may include, but is not limited to, type of network services accessed, type of applications accessed, type of content accessed, frequency of accessing a network service, frequency of accessing an application, frequency of accessing a content item and environmental conditions, such as time and location, related to the accessing of network, services, applications, content and the like.

In one or more aspects of the method, selecting, for presentation, first, second or third media content may include determining a schedule for presenting media content from the plurality of media content, determining a frequency for presenting media content from the plurality of media content or determining which media content item(s) from the plurality of media content to be presented. For presentation of the second media content, determination of a schedule, a frequency or which media content item(s) from the plurality of media content to be presented is based on the general usage behaviour profile. For presentation of the third media content, determination of a schedule, a frequency or which media content item(s) from the plurality of media content to be presented is based on a related activity-specific usage behaviour sub-profile.

In addition to selecting media content for presentation, the optimization method may include optimization of other facets of the current use activity to further align with the user's usage behaviour. For example, the method may include selecting, for presentation, a display appearance for the non-activity-specific use based on the user profile, specifically the general usage behaviour profile or selecting, for presentation, a display appearance for the non-activity specific use based on a geographic location, time of day or other environmental condition of the wireless device. Additionally, the method may include selecting, for presentation, a display appearance for the activity specific related use based on the user profile, specifically one of one or more activity-specific usage behaviour sub-profiles or selecting, for presentation, a display appearance for the activity-specific related use based on a geographic location, time of day or other environmental condition of the wireless device.

In one specific aspect of the method, receiving a plurality of media content is further defined as receiving a plurality of advertising content. In such aspect, storing usage behaviour data in one or more activity-specific usage behaviour sub-profiles further defines the one or more activity specific usage profiles as a purchasing user behaviour sub-profile, such as a specific usage behaviour sub-profile associated with purchasing or browsing items for purchase with a specified category or classification. Thus, in such aspect, presentation of third media content may be further defined as selecting, for presentation, the third advertising content from the plurality of advertising content if the predetermined threshold is met and the user is currently engaged in navigating a purchasing portal, wherein the third advertising content is selected based on a purchasing usage behaviour sub-profile. In addition to selecting advertising content for presentation, the optimization method may further select an order of presentation for items available on the purchasing portal based on the purchasing usage behaviour sub-profile and/or a price for items available on the purchasing portal based on the purchasing usage behaviour sub-profile. Further, the optimization method may select for presentation a display appearance for the purchasing portal based on the user profile, specifically the purchasing usage behaviour sub-profile or an environmental condition, such as the geographic location of the wireless device, time of day or the like.

A further aspect is provided for by at least one processor that is configured for optimizing the presentation of media content on a wireless communication device. The processor includes a first module for receiving a plurality of media content having metadata associated with one or more media content categories, a second module for capturing usage behaviour data on the wireless device and a third module for storing the usage behaviour data in a user profile that includes a general usage behaviour profile and one or more activity-specific usage behaviour sub-profiles. The processor additionally includes a fourth module for selecting, for presentation, first media content from the plurality of media content. The first media content is randomly selected until a predetermined threshold of usage behaviour data is stored in the user profile. Additionally, the processor includes a fifth module for selecting, for presentation, second media content from the plurality of media content if the predetermined threshold is met and a user is currently engaged in non-activity-specific related use. The second media content is selected based on the general usage behaviour profile. The processor also includes a sixth module for selecting, for presentation, third media content from the plurality of media content if the predetermined threshold is met and the user is currently engaged in an activity-specific related use. The third media content is selected based on an activity-specific usage behaviour sub-profile.

A further aspect provides a computer program product that includes a computer-readable medium. The medium includes at least one instruction for causing a computer to receive a plurality of media content having metadata associated with one or more media content categories, at least one instruction for causing the computer to capture usage behaviour data on the wireless device and at least one instruction for causing the computer to store the usage behaviour data in a user profile that includes a general usage behaviour profile and one or more activity-specific usage behaviour sub-profiles. The medium additionally includes at least one instruction for causing the computer to select for presentation first media content from the plurality of media content. The first media content is randomly selected until a predetermined threshold of usage behaviour data is stored in the user profile. Additionally, the medium includes at least one instruction for causing the computer to select for presentation second media content from the plurality of media content if the predetermined threshold is met and a user is currently engaged in non-activity-specific related use. The second media content is selected based on the general usage behaviour profile. The medium also includes at least one instruction for causing the computer to select for presentation third media content from the plurality of media content if the predetermined threshold is met and the user is currently engaged in an activity-specific related use. The third media content is selected based on an activity-specific usage behaviour sub-profile.

Yet another related aspect is provided for by a wireless communication apparatus. The apparatus includes means for receiving a plurality of media content having metadata associated with one or more media content categories, means for capturing usage behaviour data on the wireless device and means for storing usage behaviour data in a user profile that includes a general usage behaviour profile and one or more activity-specific usage behaviour sub-profiles. The apparatus additionally includes means for selecting, for presentation, first media content from the plurality of media content. The first media content is randomly selected until a predetermined threshold of usage behaviour data is stored in the user profile. Additionally, the apparatus includes means for selecting, for presentation, second media content from the plurality of media content if the predetermined threshold is met and the user is currently engaged in non-activity-specific related use. The second media content is selected based on the general usage behaviour profile. The apparatus also includes means for selecting, for presentation, third media content from the plurality of media content if the predetermined threshold is met and the user is currently engaged in an activity-specific related use. The third media content is selected based on an activity-specific usage behaviour sub-profile.

A further aspect is defined by a wireless communication device. The device includes a computer platform including at least one processor and a memory. The device further includes a usage behaviour capture application stored in the memory and executable by the at least one processor. The usage behaviour application is operable to collect usage behaviour data and store the data in a user profile that includes a general usage behaviour profile and one or more activity-specific usage behaviour sub-profiles. Additionally, the device includes a media content selection application stored in the memory and executable by the at least one processor. The media content application is operable to receive a plurality of media content having metadata associated with one or more media content categories and to select media content for presentation based on a media content selection routine. The media content selection routines include a first media content selection routine operable to select for presentation first media content from the plurality of media content. The first media content is randomly selected until a predetermined threshold of usage behaviour data is stored in the user profile. The media content selection routines include a second media content selection routine operable to select for presentation second media content from the plurality of media content if the predetermined threshold is met and the user is currently engaged in non-activity-specific related use. The second media content is selected based on the general usage behaviour profile. Additionally, the media content selection routine includes a third media content selection operable to select for presentation third media content from the plurality of media content if the predetermined threshold is met and the user is currently engaged in an activity-specific related use. The third media content is selected based on an activity-specific usage behaviour sub-profile.

According to one or more aspects of the device, the usage behaviour capture application is operable to capture usage behaviour data that may include, but is not limited to, type of network services accessed, type of applications accessed, type of content accessed, frequency of accessing a network service, frequency of accessing an application, frequency of accessing a content item and environmental conditions, such as time and location, related to the accessing of network, services, applications, content and the like.

In one or more aspects of the device, the second media content selection routine is further operable to determine a schedule for presenting each of the plurality of media content based on the general usage behaviour profile. In one or more further aspects, the second media content selection routine is operable to determine a frequency for presenting media items having metadata of a specific media content category based upon a frequency of occurrence of usage behaviour related to the specific media content category as determined from the general usage behaviour profile.

In one or more aspects of the device, the third media content selection routine media content selection application is further operable to determine a schedule for presenting each of the plurality of media content having metadata associated with the current use based on a related activity-specific usage behaviour sub-profile. In further aspects, the third media content selection routine is operable to determine a frequency for presenting media items having metadata associated with the current use based upon a frequency of occurrence of usage behaviour related to the current use as determined from the related activity-specific usage behaviour sub-profile.

In one or more alternate aspects, the wireless device may include a display appearance selection application operable to select for presentation a display appearance for the non-activity specific use based on the user profile, specifically based on the general usage behaviour profile or an environmental condition, such as a geographic location, a time, or the like. Additionally, the display appearance selection application may be operable to select for presentation a display appearance for the activity-specific related use based on the activity-specific usage behaviour sub-profile.

In one or more specific aspects of the wireless device, the media content selection application is further defined as an advertising content selection application operable to receive a plurality of advertising content. In such aspects, the third media content selection routine to select for presentation third advertising content from a plurality of advertising content if the predetermined threshold is met and the user is currently engaged in navigating a purchasing portal. The third advertising content is selected based on a purchasing usage behaviour sub-profile. In applications in which the media content selection application is further defined as an advertising content application, the device may further include a purchasing selection application operable to select an order of presentation for items available on the purchasing portal or a price for items available on the purchasing portal based on the purchasing usage behaviour sub-profile. Additionally, the device may include a display appearance selection application operable for selecting, for presentation, a display appearance for the purchasing portal based on the user profile, specifically the one of the one or more purchasing usage behaviour sub-profiles and/or an environmental condition, such as the geographic location of the device, the time, or the like.

Thus, one or more of the present aspects provide for optimizing the presentation of media content, such as advertising content, on a wireless device. The one or more of the present aspects provide for determining, at the wireless device, which media content to present based on historical user usage behaviour stored locally on the wireless device. In this regard, the described methods, apparatus and systems are wireless-device based and, as such, do not require for back-end servers or other network devices to intervene in deciding what media content is to be communicated to the wireless device and/or presented on the wireless device. The described methods, apparatus and systems are less complex in terms of computational requirements than targeting applications and, as such, are especially suited for those wireless devices with slower processing capabilities. Therefore, the present aspects provide for a simple and cost effective approach to targeted media content presentation that additionally affords the wireless device user a level of privacy.

### BRIEF DESCRIPTION OF THE DRAWINGS

The disclosed aspects will hereinafter be described in conjunction with the appended drawings, provided to illustrate and not to limit the disclosed aspects, wherein like designations denote the elements, and in which:

FIG. 1 is a block diagram of a system for optimizing the selection of media content for presentation on a wireless device, according to an aspect;

FIG. 2 is a block diagram of a wireless communication device configured for optimizing the selection of media content for presentation on the device, according to an aspect;

FIG. 3 is a block diagram of a media content distribution system used to distribute media content to wireless devices, according to an aspect;

FIG. 4 is a flow diagram of a method for optimizing the selection of media content for presentation on a wireless device, according to an aspect;

FIG. 5 is an illustrative example of a display on a wireless communication device providing for areas for presenting media content in conjunction with a shopping/purchasing portal, according to an aspect;

FIG. 6 is an illustrative example of a display on a wireless communication device providing for the display of selected advertising media content in the designated areas, according to an aspect;

FIG. 7 is an illustrative example of a display on a wireless communication device providing for a change of appearance of the display based on usage behaviour data, according to an aspect;

FIG. 8 is an illustrative example of a display on a wireless communication device providing for a change in the order of display of items based on usage behaviour data, according to another aspect;

FIG. 9 is an illustrative example of a display on a wireless communication device providing for adjusting the price of presented items based on usage behaviour data, according to an aspect; and

FIG. 10 is a flow diagram of a method for optimizing the selection of media content for presentation on a wireless device, according to an aspect.

### DETAILED DESCRIPTION

The present devices, apparatus, methods, computer-readable media, and processors now will be described in more detail hereinafter with reference to the accompanying drawings, in which aspects of the invention are shown. The devices, apparatus, methods, computer-readable media and processors may, however, be embodied in many different forms and should not be construed as limited to the aspects set forth herein; rather, these aspects are provided so that this disclosure will be thorough and complete, and will fully convey the scope of the invention to those skilled in the art. Like numbers refer to like elements throughout. Broken lines in the figures refer to elements that are optional to certain aspects.

The various aspects described herein are in connection with a wireless communication device. A wireless communication device can also be called a subscriber station, a subscriber unit, mobile station, mobile, remote station, access point, remote terminal, access terminal, user terminal, user agent, a user device, or user equipment. A subscriber station may be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem.

In addition to the foregoing, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, in this example, X could employ A, or X could employ B, or X could employ both A and B, and thus the statement "X employs A or B" is satisfied under any of the foregoing instances. In addition, the articles "a" and "an" as used in this application and the appended claims should generally be construed to mean "one or more" unless specified otherwise or clear from context to be directed to a singular form.

One or more of the present aspects provide for methods, systems, apparatus, and computer program products for optimizing the presentation of media content, in particular advertising content, on wireless communication devices. One or more of the aspects herein presented are implemented by wireless device-side clients/applications and, therefore may not require the assistance of network devices or content providers to acquire and store user profiles and/or usage behaviour data to determine which media content is to be targeted for a given wireless device. According to one or more of the present aspects, user profiles that monitor and track user behaviour are captured and stored at the wireless devices. The wireless device receives a broadcast/multicast communication or the like that includes a plurality of non-user-specific, generic media content. The wireless device uses the user profile and, specifically, the usage behaviour data to determine which media content items from the plurality of media content to present. The usage behaviour data may be relied on to determine a frequency of presentation, a schedule of presentation, a strategic placement of the media content with a given client/application or the like. The wireless device -side clients/applications are especially suited for wireless devices, which may have relatively slower processing speeds because the clients/applications may require less computation in determining which media content to present.

In one aspect, the wireless device-side media content optimization/targeting application operates in various stages according to the user's current use state. For example, the targeting application may initially randomly present media content or present media content based on an evenly distributed schedule until a predetermined threshold of usage behaviour data has been captured. Once the threshold has been met, the targeting application may rely on a general usage behaviour profile or an activity-specific usage behaviour sub-profile to determine the presentation of the media content. For example, if the user is engaged in general use (e.g. a non-activity specific application, network service or the like), the targeting application may rely on the overall "general" usage behaviour profile to determine media content presentation. Alternatively, if the user is engaged in an activity specific use, the targeting application may rely on activity-specific usage behaviour sub-profile to determine media content presentation.

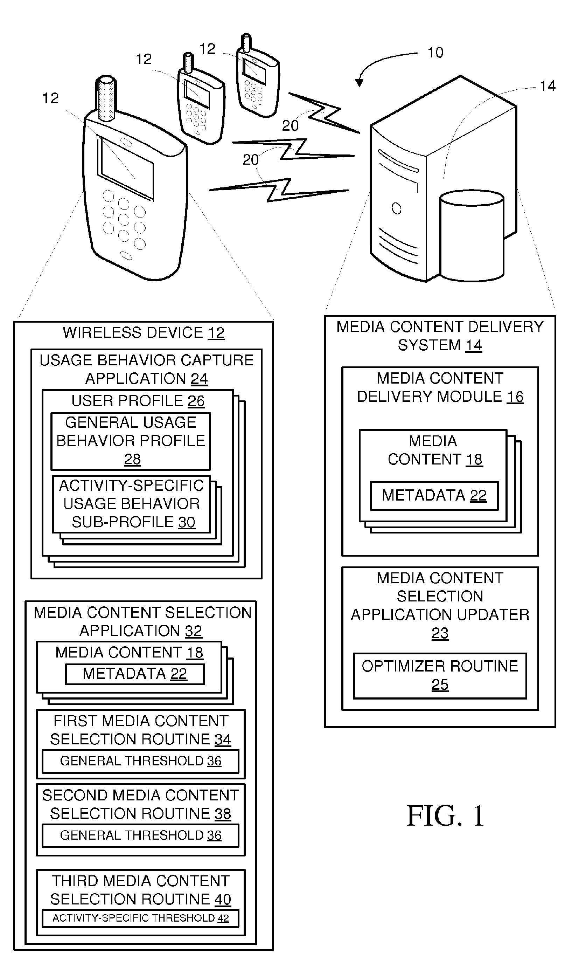

Referring to Fig. 1, a block diagram representation of a system **10** for optimizing the presentation of media content on a wireless device is shown, according to one aspect. The system includes one or more wireless devices **12** and a media content delivery system **14.** As shown, media content delivery system **14** may include one or more network devices, such as servers, databases and the like. The media content delivery system **14** includes a media content delivery module **16** operable to deliver media content **18** wirelessly across wireless network **20.** The media content delivery module **16** may provide for unicast delivery, broadcast delivery, multicast delivery or any other known or future known wireless delivery mechanism capable of wirelessly delivering the media content **18** across a wireless network **20.** Each item of media content **18** includes associated metadata **22** that provides for the media content to be associated with one or more media content categories. For example, if the media content is advertising content, the metadata may include information related to the type and/or sub-type of product or service being advertised, the price or price classification of the product or service being advertised, the demographics of the target group for whom the advertised product or service is generally targeted for and the like.

The media content delivery system **14** may also include a media content selection application updater **23** operable to define and communicate updates and changes to the wireless device-side media content selection application **32** or any of the routines **34, 38,** and **40** within the application **32.** For example, the updater **23** may provide for adjusting any threshold within a routine **34, 38,** and **40,** changing the presentation frequency or schedule for any content chosen/targeted to be presented, overriding the application **32** or any routine **34, 38,** and **40** within the application for all of the content or any specific content item. In addition, the updater **32** may include an optimizer routine **25** that is operable to determine optimal conditions and/or adjustments for the media content selection application **32** and associated routines **34, 38,** and **40.** In this regard, the media content selection application can be dynamically changed, adjusted, overridden or the like by the media content delivery system **14.**

The wireless devices **12** include a usage behaviour capture application **24** that is operable to capture a user's usage behaviour data. The usage behaviour application may be configured to capture any usage behaviour data that may be relevant to determining what media content should be presented and/or the frequency of presenting the media content on the wireless device. For example, usage behaviour data may include, but is not limited to, the types of applications executed on the device, the types of network services accessed on the device, the types of device-based or network service-based content accessed on the device, the frequency by which an application is executed, the frequency by which a network service is accessed, the frequency by which device-based or network service-based content is accessed and the like. The usage behaviour application **24** is operable to store the captured usage behaviour data in one or more user profiles **26.** While many wireless devices are personal to a single user, in other instances a wireless device may be shared among more than one user and, therefore, multiple user profiles may be necessary on a wireless device to accommodate the usage behaviour data for each user.

The user profile **26** may include a general usage behaviour profile **28** and one or more activity specific usage behaviour sub-profiles **30.** The general usage behaviour profile **28** may provide for storage of all or substantially all of the recent usage behaviour for the designated user. The one or more activity specific usage behaviour sub-profiles **30** may provide for storage of all or substantially all of the usage behaviour data related to the activity for which the sub profile is associated.

The wireless device **12** additionally includes a media content selection application **32** operable to receive wirelessly delivered media content **18** and select for presentation media content from the received media content **18.** As previously described, the network device will wirelessly deliver media content **18** received by the one or more or more wireless devices **12.** The delivered media content may not be considered targeted media content and, therefore includes media content irrespective of the wireless device user's interests and/or usage behaviour. The media content selection application **32** may include a first media content selection routine **34** operable to randomly select, for presentation, media content from the received media content **18** if a predetermined general threshold **36** of usage behaviour data has not been stored in the user profile. Thus, the first media content selection routine **34** provides for random selection of the media content up until the user profile has acquired sufficient predetermined usage behaviour data to allow for optimal or targeted presentation of media content **18.** Random selection of media content **18** may involve a random number generator to determine which of the plurality of media content **18** items to present. Alternatively, in some aspects, random selection may include implementing a schedule that rotates the presentation of each of the plurality of media content **18** items.

The media content selection application **32** may include a second media content selection routine **38** that is operable to select, for presentation, media content from the received media content **18** if the general threshold **36** of usage behaviour data has been met and the user is currently engaged in a use that is non-activity-specific. Non-activity-specific use is defined as a general use that is not associated with an activity-specific usage behaviour sub-profile. As such, the second media content selection routine **38** may rely on the general usage behaviour profile **28** to determine which media content from the plurality of media content **18** to present. In one aspect, the second media content selection routine will compare the metadata **22** associated with the received media content **18** to usage behaviour data in the general usage behaviour profile **28** to determine which media content item to present. In one aspect, media content **18** having metadata **22** in a media content category that has the highest amount of general usage behaviour data may be selected for immediate presentation. Alternatively, a presentation schedule or a frequency of presentation may be determined based on the categories of the media content, as defined by the metadata **22,** and the amount of usage behaviour data associated with each category in the general usage behaviour profile **28.** In this regard, media content **18** that is associated with a category experiencing a high amount of usage behaviour will be schedule for more frequent presentation when the user is currently in a general use state and media content **18** that is associated with a category experiencing a low amount of usage behaviour will be scheduled for less frequent presentation when the user is currently in a general use state.

The media content selection application **32** may include a third media content selection routine **40** that is operable to select, for presentation, media content from the received media content **18** if an activity-specific threshold **42** of usage behaviour data has been met and the user is currently engaged in a use that is activity-specific. Activity-specific use is defined as a use that is associated with an activity-specific usage behaviour sub-profile. As such, the third media content selection routine **40** may rely on the associated activity-specific usage behaviour sub-profile **30** to determine which media content from the plurality of media content **18** to present. In one aspect, the third media content selection routine **40** will compare the metadata **22** associated with the received media content **18** to usage behaviour data in the activity-specific usage behaviour sub-profile **30** to determine which media content item to present. In one aspect, media content **18** having metadata **22** in a media content category that has the highest amount of activity-specific usage behaviour data may be selected for immediate presentation. Alternatively, a presentation schedule may be determined based on the categories of the media content, as defined by the metadata **22,** and the amount of activity-specific behaviour data associated with each category in the activity specific usage behaviour sub-profile **30.** In this regard, media content **18** that is associated with a category experiencing a high amount of activity specific usage behaviour will be scheduled for more frequent presentation when the user is currently in an activity-specific use state and media content **18** that is associated with a category experiencing a low amount of activity specific usage behaviour will be scheduled for less frequent presentation when the user is currently in an activity-specific use state.

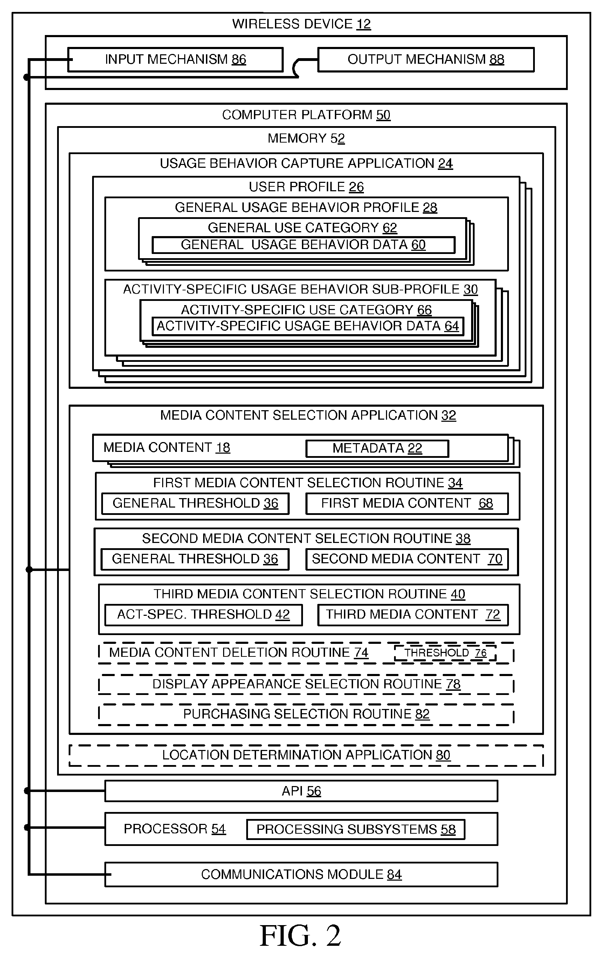

Referring to Fig. 2, according to one aspect, a detailed block diagram representation of wireless communication device **12** is depicted. The wireless communication device **12** may include any type of computerized, communication device, such as cellular telephone, Personal Digital Assistant (PDA), two-way text pager, portable computer, and even a separate computer platform that has a wireless communications portal, and which also may have a wired connection to a network or the Internet. The wireless communication device can be a remote-slave, or other device that does not have an end-user thereof but simply communicates data across the wireless network, such as remote sensors, diagnostic tools, data relays, and the like. The present apparatus and methods can accordingly be performed on any form of wireless communication device or wireless computer module, including a wireless communication portal, including without limitation, wireless modems, PCMCIA cards, access terminals, desktop computers or any combination or subcombination thereof.

The wireless communication device **12** includes computer platform **50** that can transmit data across a wireless network, and receive and execute routines and applications. Computer platform **50** includes memory **52,** which may comprise volatile and nonvolatile memory such as read-only and/or random-access memory (RAM and ROM), EPROM, EEPROM, flash cards, or any memory common to computer platforms. Further, memory **52** may include one or more flash memory cells, or may be any secondary or tertiary storage device, such as magnetic media, optical media, tape, or soft or hard disk.

Further, computer platform **50** also includes processor **54,** which may be an application-specific integrated circuit ("ASIC"), or other chipset, processor, logic circuit, or other data processing device. Processor **54** or other processor such as ASIC may execute an application programming interface ("API") layer **56** that interfaces with any resident programs and/or modules, such as usage behaviour capture application **24** and/or media content selection application **32,** stored in the memory **52** of wireless device **12.** API **56** may be embodied in a runtime environment executing on the respective wireless device. One such runtime environment is Binary Runtime Environment for Wireless^{®} (BREW^{®}) software developed by QUALCOMM Incorporated, of San Diego, California. Other runtime environments may be utilized that, for example, operate to control the execution of applications on wireless computing devices.

Processor **54** includes various processing subsystems **58** embodied in hardware, firmware, software, and combinations thereof, that enable the functionality of wireless device **12** and the operability of the wireless communication device on wireless network **20.** For example, processing subsystems **58** allow for initiating and maintaining communications, and exchanging data, with other networked devices. In aspects in which the communication device is defined as a cellular telephone, the communications processor **54** may additionally include one or a combination of processing subsystems **88,** such as sound, non-volatile memory, file system, transmit, receive, searcher, layer 1, layer 2, layer 3, main control, remote procedure, handset, power management, digital signal processor, messaging, call manager, Bluetooth^{®} system, Bluetooth^{®} LPOS, position engine, user interface, sleep, data services, security, authentication, USIM/SIM, voice services, graphics, USB, and multimedia such as MPEG, GPRS, etc (all of which are not individually depicted in Fig. 2 for the sake of clarity).

For one or more of the disclosed aspects, processing subsystems **58** of processor **54** may include any subsystem components that interact with a usage behaviour capture application **24** and media content selection application **32.** For example, processing subsystems **58** may include location devices/applications, such as GPS applications/devices, and any other environmental devices/applications that are implemented in conjunction with media content selection application **32.** Alternatively, one or more of the processing subsystems **58** may be configured as modules/applications and/or logic stored in memory **52.**

The memory **52** of computer platform **50** includes the usage behaviour capture application **24** that is operable to capture a user's usage behaviour data. The usage behaviour capture application **24** may be factory or service provider pre-loaded on a new wireless device **12** or the application **24** may be wirelessly downloaded or other otherwise acquired by a pre-existing wireless device **12.** The usage behaviour application may be configured to capture any usage behaviour data that may be relevant to determine what media content is to be presented and/or the frequency of presenting the media content on the wireless device. For example, usage behaviour data may include, but is not limited to, the types of applications executed on the device, the types of network services accessed on the device, the types of device-based or network service-based content accessed on the device, the frequency by which an application is executed, the frequency by which a network service is accessed, the frequency by which device-based or network service-based content is accessed and the like. The usage behaviour application **24** is operable to store the captured usage behaviour data in one or more user profiles **26.** As previously noted, the wireless device may be configured to allow for more than one user profiles **26** to accommodate multiple device users. Generally, wireless devices are limited in terms of storage capacity and, thus, the user profile **26** may be limited in terms of the usage behaviour data capacity. In this regard, the user profile may be configured to store the usage behaviour data and to delete or otherwise age data in the user profile that has reached a predetermined maximum allowable storage date.

The user profile **26** may include a general usage behaviour profile **28** and one or more activity specific usage behaviour sub-profiles **30.** The general usage behaviour profile **28** may provide for storage of all or substantially all of the overall usage behaviour for the designated user, herein referred to as the general usage behaviour data **60.** The general usage behaviour data **60** may be included in one or more predefined general use categories **62** within the general usage behaviour profile **28.** The categories **62** define wireless device uses and/or activities for the purpose of categorizing or classifying the usage behaviour data. For example, if a user executes a gaming application, usage behaviour data associated with the execution of the gaming application may be stored in a gaming category or if a user access a music provider network service, usage behaviour data associated with the accessing of the music provider network service may be stored in a music category.

The one or more activity-specific usage behaviour sub-profiles **30** may provide for storage of all or substantially all of the most usage behaviour data related to the activity for which the sub profile is associated, referred to herein as the activity-specific usage behaviour data **64.** For example, if the sub-profile **30** is associated with a shopping/purchasing activity, the sub-profile **30** will store all or substantially all of the usage behaviour related to shopping/purchasing, such as, which shopping clients have been executed/accessed, the frequency of shopping client access, the content accessed/viewed while in the shopping client and the like. In other instances, the sub-profiles **30** may further delineate another sub-profile **30.** For example, using the example of a shopping/purchasing activity sub-profile, a further sub-profile **30** may be associated with a certain type of product or service that the user has purchased or has shown an interest in purchasing. For example, a sub-profile **30** may be associated with video game shopping/purchasing activity and, thus the sub-profile **30** may store all or substantially all of the usage behaviour related to video games and, in particular video game shopping/purchasing, such as, which video games and/or the type/category of video games that have been purchased or browsed, the frequency by which a type/category of video game is purchased or browsed, the frequency by which a video game or video game type/category is accessed/executed and the like.

The activity-specific usage behaviour data **64** may be included in one or more predefined activity-specific use categories **66** within the activity-specific usage behaviour sub-profile **30.** The categories **66** define certain use or activity aspects of a predetermined specific activity for the purpose of categorizing or classifying the usage behaviour data for a predetermined activity. For example, if a sub-profile **30** is defined as shopping/purchasing activity sub-profile 30 and the user navigates a shopping/purchasing application/client, usage behaviour data associated with the type of category of products or serviced purchased or browsed may be stored in associated categories. In this example, categories may be defined by video game applications, ringbones, enterprise applications or any other product or service available for purchase on the wireless device. In another related example, if a sub-profile **30** is defined as a video game activity sub-profile **30,** usage behaviour data associated with the type or category of video games purchased or browsed may be stored in associated categories. In this example, categories may be defined as fantasy video games, shooter video games, sports video games, strategy games, and the like.

It should be noted that in most aspects activity-specific usage behaviour data **64** is a subset of general usage behaviour data **60** and, as such, activity-specific usage behaviour data **64** may be stored in the general usage behaviour profile **28,** as well as one or more of the activity-specific usage behaviour sub-profiles **30.**

The memory **52** of computer platform **50** additionally stores a media content selection application **32.** The media content selection application **32** may be factory or service provider pre-loaded on a new wireless device **12** or the application **32** may be wirelessly downloaded or other otherwise acquired by a pre-existing wireless device **12.** The media content selection application **32** is operable to receive wirelessly delivered media content **18** and select for presentation media content from the received media content **18.** As previously described, each item of media content **18** includes associated metadata **22** that provides for the media content to be associated with one or more general use categories **62** and/or activity-specific use categories **66.** For example, in one aspect, the media content may be advertising content and the metadata may include information related to the type and/or sub-type of product or service being advertised, the price or price classification of the product or service being advertised, the demographics of the target group for whom the advertised product or service is generally targeted for and any other information that may provide for the media content to be classified according to usage behaviour.

In one aspect, the media content selection application **32** may include first media content selection routine **34,** second media content selection routine **38** and third media content selection routine **40.** The application **32** determines which of the routines to execute based on thresholds of captured usage behaviour data and the use or activity in which the user is currently engaged. The first media content selection routine **34** is operable to randomly select, for presentation, first media content **68** from the received media content 18 if a predetermined general threshold **36** of general usage behaviour data 60 has not been met (i.e., insufficient data has been captured and stored in the general usage behaviour profile **28).** The general threshold may include a value and a condition. The threshold value may be a numeric value, for example, a value that defines an acceptable amount of usage behaviour data needed to trigger targeted or optimized media content presentation. The threshold conditions may include "greater than," "equal to," "greater than or equal to" or the like. For the sake of clarity, the term "meets" a threshold is used herein to define the instance in which a measured value exceeds or equals of the predefined value. In this regard, the media content selection application **32** operates under the assumption that targeted or optimized media content presentation may only occur after a representative amount of usage behaviour has been acquired.

It should be noted that random selection may provide for a random number generator to determine which of the plurality of received media content **18** to present. The random number generator (not shown in Fig. 2) may exist as an application in memory **52** or as a processing subsystem **68.** Alternatively, in some aspects random selection may include implementing a rotating schedule that provides for an even distribution of presentation for each media content item **18.** Thus, the first media content selection routine **34** provides for random selection or scheduled even distribution selection of the media content up until the general usage behaviour profile **28** has acquired the predetermined amount of general usage behaviour data **28** to allow for optimal or targeted presentation of media content **18.**

The media content selection application **32** may include a second media content selection routine **38** that is operable to select, for presentation, second media content **70** from the received media content **18** if the general threshold **36** of general usage behaviour data **60** has been met and the user is currently engaged in a use that is non-activity-specific. Non-activity-specific use is defined as a general use that is not associated with an activity-specific usage behaviour sub-profile **30.** As such, the second media content selection routine **38** may rely on the general usage behaviour profile **28** to determine which media content from the plurality of media content **18** to present.

In one aspect, the second media content selection routine **38** compares the metadata **22** associated with the received media content **18** to usage behaviour data **60** in the general usage behaviour profile **28** to determine which media content item to present. In one aspect, media content **18** having metadata **22** in a general use category **62** that has the highest amount of general usage behaviour data may be selected for immediate presentation. Alternatively, a presentation schedule or a frequency of presentation may be determined based on the categories of the media content, as defined by the metadata **22,** and the amount of usage behaviour data associated with each category in the general usage behaviour profile **28.** In this regard, media content **18** that is associated with a category experiencing a high amount of usage behaviour will be scheduled for more frequent presentation when the user is currently in a general use state and media content **18** that is associated with a category experiencing a low amount of usage behaviour will be scheduled for less frequent presentation when the user is currently in a general use state.

For example, the media content **18** may comprise advertising content, such that the plurality of received advertising content includes twelve (12) advertisements, four (4) related to a ringbone category, four (4) related to a video game application category, and four (4) related to an enterprise application category. Assuming that the user is currently engaged in a non-activity-specific use/activity, initially the wireless device may rely on the first media selection routine **34** until the general threshold **36** is met. Thus, if the general threshold is set at one hundred (100) general usage behaviour events, the media content selection application may rely on the first media selection routine for selecting the first media content **68** until one hundred (100) general usage behaviour events are reached or exceeded.

In this regard, the twelve (12) advertisements may be randomly selected using a random number generator or the like or, alternatively, a rotating schedule may be executed that provides for equally presentation of the twelve (12) advertisements until the general threshold 36 of one hundred (100) events is met. Once the general threshold of one hundred (100) general usage behaviour entries is reached or exceeded, and the user is engaged in a non-activity-specific use or activity, the media content selection application **32** may implement the second media content selection routine **38.** If the general usage behaviour profile indicates thirty (30) usage behaviour entries related to video games, fifteen (15) usage behaviours related to enterprise applications and five (5) usage behaviours related to ringbones, the second media content selection routine **38** may select, for presentation, a video game advertisement for immediate presentation based on the highest number or percentage of usage behaviour entries or a schedule may be implemented having presentation frequency that corresponds to the percentages of usage behaviour. In this instance, the schedule reflects that the video game advertisements are to be presented 60% of the time that an application/client requests presentation of an advertisement, the enterprise advertisements are to be presented 30% of the time and the ringbone advertisements are to be presented 10% of the time. It should be noted that in certain instances, in which one or more media content items **18** have no related general usage behaviour data **60,** the second media content selection routine **38** may not select those particular media content items for presentation.

The media content selection application **32** may include a third media content selection routine **40** that is operable to select, for presentation, third media content **72** from the received media content **18** if an activity-specific threshold **42** of usage behaviour data has been met and the user is currently engaged in a use that is activity-specific. Activity-specific use is defined as a use that is associated with an activity-specific usage behaviour sub-profile. As such, the third media content selection routine **40** may rely on the associated activity-specific usage behaviour sub-profile **30** to determine which media content from the plurality of media content **18** to present.

In one aspect, the third media content selection routine **40** may compare the metadata **22** associated with the received media content **18** to activity-specific usage behaviour data **64** in the activity-specific usage behaviour sub-profile **30** to determine which media content item to present. In one aspect, media content **18** having metadata **22** in an activity-specific use category **66** that has the highest amount of activity-specific usage behaviour data **64** may be selected for immediate presentation. Alternatively, a presentation schedule may be determined based on the categories associated with the media content, as defined by the metadata **22,** and the amount of activity-specific behaviour data **64** associated with each category **66** in the activity specific usage behaviour sub-profile **30.** In this regard, media content **18** that is associated with a category experiencing a high amount of activity specific usage behaviour will be schedule for more frequent presentation when the user is currently in an activity-specific use state and media content **18** that is associated with a category experiencing a low amount of activity specific usage behaviour will be scheduled for less frequent presentation when the user is currently in an activity-specific use state.

For example, the media content **18** may comprise advertising content, such that the plurality of received advertising content includes twenty (20) advertisements; twelve (12) related to a video game application category, four (4) related to an enterprise application category and 4 (four) related to a ringbone category. The twelve (12) video game advertisements include four (4) related to sports video game, four (4) related to shooter video games, and four (4) related to strategy video games. In this example, video games are predefined as an activity-specific use that warrants a video game usage behaviour sub-profile **30.** Assuming the user is currently engaged in a video game use, such as browsing a video game portal that offers video games, initially, the wireless device may rely on the first media selection routine **34** until the general threshold **36** is met and subsequently rely on the second media selection routine until the activity-specific threshold **42** is met. Thus, if the general threshold **36** is set at one hundred (100) general usage behaviour events, the media content selection application **32** may rely on the first media selection routine **34** for selecting the third media content **40** until one hundred (100) general usage behaviour events are reached or exceeded. Additionally, if the activity-specific threshold **42** is set at twenty five (25) activity-specific usage behaviour events, the media content selection application **32** may rely on the second media selection routine (or the first selection routine if the general threshold **36** is not met) for selecting third media content **40** until twenty five (25) video game related usage behaviour events are reached or exceeded.

In this regard, the twenty (20) advertisements may be randomly selected using a random number generator or the like or, alternatively, a rotating schedule may be executed that provides for equally presentation of the twenty (20) advertisements until the general threshold of one hundred (100) general events is met. Once the general threshold of one hundred (100) general usage behaviour entries is reached or exceeded, and the user is engaged in a video game related use, the media content selection application **32** may implement the third media content selection routine **40** if the activity-specific threshold **42** of twenty-five (25) video game usage behaviour events have been reached or exceeded, else, if the activity-specific threshold **42** is not met, the second media content selection routine **38** may be implemented. If the activity-specific usage behaviour sub-profile indicates 50 video game usage behaviour events; twenty-five (25) related to sports video games, ten (10) related to strategy video games, five (5) related to shooter video games and ten (10) related to other categories of video games, the third media content selection routine **40** may select, for presentation, a sports video game advertisement for immediate presentation based on the highest number or percentage of activity-specific usage behaviour entries or a schedule may be implemented having presentation frequency that corresponds to the percentages of usage behaviour. In this instance, the schedule reflects that the sports video game advertisements are to be presented 62.5% of the time that a video gaming client/portal requests presentation of an advertisement, the strategy video game advertisements are to be presented 25% of the time and the shooter video game advertisements are to be presented 12.5% of the time.

Additionally, the media content selection application **32** may optionally include media content deletion routine **74** operable to delete received media content **18** based on usage behaviour data. As previously noted, wireless device storage capacity is generally limited and, therefore, the amount of media content that can be stored on the device is limited to the amount of storage capacity allocated for such media content. Media content **18** may include metadata **22** associated with an expiration date for deleting received media content from device **12** memory **52.** Additionally, media content deletion routine **74** may be operable to delete media content **18,** upon receipt or any time thereafter, if the content deletion routine **74** determines that a media content item is associated with a category that has minimal or no association with general usage behaviour data **60.** In this regard the content deletion routine **74** may include a deletion threshold **76** that defines the minimal amount of general usage behaviour data necessary to ensure that a media content item **18** is not deleted from the wireless device **12.** For example, if the deletion threshold is set at five (5) usage behaviour events for any given category or a specific category, if media content is received that is not associated with a category having more than five (5) usage behaviour events, the media content may be deleted from the device.

Additionally, the media content selection application **32** may optionally include display appearance routine **78** operable to change the appearance of the display based on the usage behaviour data **60** and/or **64** in the user profile **26.** Changing of a display appearance may provide for a background appearance to be changed, such as a colour change, addition of wallpaper or the like based on usage behaviour. The desired display attributes may be stored locally on the wireless device or the display appearance routine **78** may prompt wireless communication with a network device for retrieving desired display attributes. For example if the user is currently engaged in browsing a shopping portal, the background of the portal pages may be changed to reflect the user's highest percentage of shopping/browsing usage behaviour. If the user's highest percentage of shopping/browsing usage behaviour is related to video games, the appearance of the shopping portal pages may be changed to reflect a video game motif or the like. If the user is currently engaged in browsing a video game shopping portal, the background of the portal pages may be changed to reflect the user's highest percentage of video game shopping/browsing usage behaviour. For instance, if the user's highest percentage of video game shopping/browsing usage behaviour data is related to sports video games, the appearance of the video game portal pages may be changed to reflect a sports motif or the like.

In addition to relying on usage behaviour data **60** and **64,** the display appearance routine **78** may be operable to change the appearance of the display based on environmental factors, such as the time of the day, time of the year, geographic location of the wireless device 12 and the like. In one aspect, in which the display appearance routine **78** is operable to change appearance based on the geographic location of the device **12,** the wireless device may include location-determining application **80,** such as a Global Positioning System (GPS) application or the like, that is operable to determine the geographic location/position of the wireless device. For example, if the wireless device is located in New York City, commonly referred to as "The Big Apple", the display appearance may adopt an apple background motif or if the device is located in the Miami Beach area, prominently known for art deco designs and styles, the display appearance may adopt pastel hues that are associated with the art deco style.

In addition, the media content application **32** may optionally include purchasing selection routine **82** operable to change the purchasing options presented to the user based on the usage behaviour data if the user is currently engaged in a purchasing/browsing application/client. For example, the purchasing selection routine may be operable to change the order of which items or services are presented in a purchasing portal based on the usage behaviour data. For example, if the user is currently engaged in purchasing/browsing a video game portal and the usage behaviour data indicates that the user has a high level of interest in sports related video games, the purchasing selection routine **82** may present all of the available sports related video games first. Subsequently presented video games may additionally fall in line with the usage behaviour data. Additionally, the purchasing selection routine **82** may be operable to change the price of items or services based on the usage behaviour data. For example, if the user has a high level of interest in sports related video games, the purchasing selection routine **82** may provide for lowering or raising the price of available sports related video games. The price by which items or services are lowered may be predetermined set number or percentage stored locally or the purchasing selection routine **82** may prompt wireless communication with a network device for retrieving desired price change information.

Wireless communication device **12** may additionally include communication module **84** that is operable to facilitate internal communications and receive and transmit external wireless communications, such as receipt of media content **18.** In this regard, communications module **84** may include mechanisms to receive broadcasted or multicasted delivery of media content **18.**

Additionally, wireless communication device **12** may include input mechanisms **86** for generating inputs into communication device, and output mechanism **88** for generating information for consumption by the user of the communication device. For example, input mechanism **86** may include a mechanism such as a key or keyboard, a mouse, a touch-screen display, a microphone, etc. Further, for example, output mechanism **98** may include a display, an audio speaker, a haptic feedback mechanism, a Personal Area Network (PAN) transceiver etc. In the illustrated aspects, the output mechanism **94** may include a display operable to present media content that is in image or video format or an audio speaker to present media content that is in an audio format.

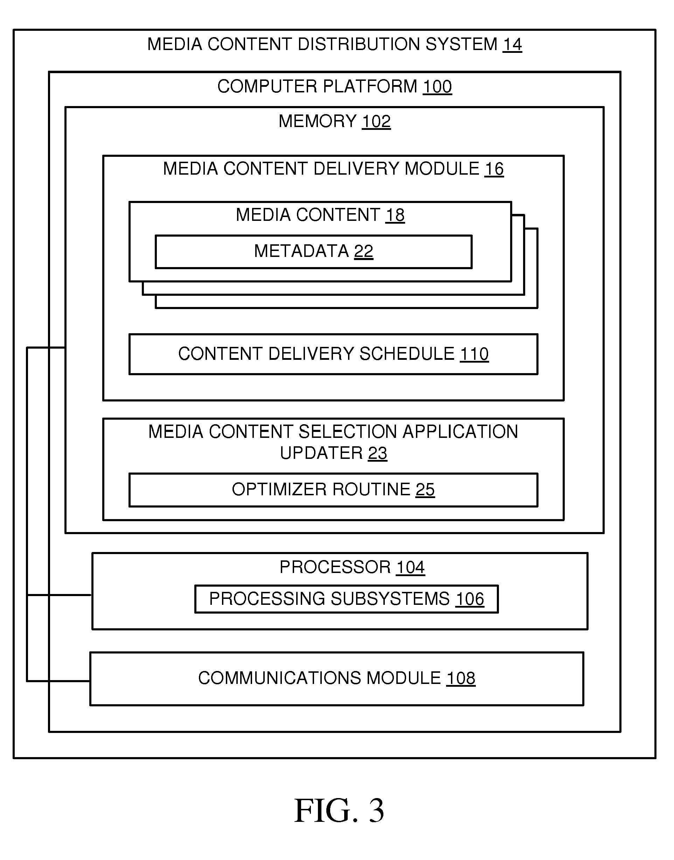

Fig. 3 is a detailed block diagram of a media content distribution system **14.** The media content distribution system **14** may comprise at least one of any type of hardware, server, personal computer, mini computer, mainframe computer, or any computing device either special purpose or general computing device. Further, the modules and applications described herein as being operated on or executed by the media content distribution system **14** may be executed entirely on a single network device, as shown in Fig. 3, or alternatively, in other aspects, separate servers, databases or computer devices may work in concert to provide data in usable formats to parties, and/or to provide a separate layer of control in the data flow between the wireless communication devices **12** and the modules and applications executed by the media content distribution system **14.**

The media content distribution system **14** includes computer platform **100** that can transmit and receive data across wired and wireless networks, and that can execute routines and applications. Computer platform **100** includes a memory **102,** which may comprise volatile and nonvolatile memory such as read-only and/or random-access memory (RAM and ROM), EPROM, EEPROM, flash cards, or any memory common to computer platforms. Further, memory **102** may include one or more flash memory cells, or may be any secondary or tertiary storage device, such as magnetic media, optical media, tape, or soft or hard disk. Further, computer platform **100** also includes a processor **104,** which may be an application-specific integrated circuit ("ASIC"), or other chipset, logic circuit, or other data processing device. Processor **104** may include various processing subsystems **106** embodied in hardware, firmware, software, and combinations thereof, that enable the functionality of media content distribution system **14** and the operability of the network device on a wired or wireless network.

The computer platform **100** further includes a communications module **108** embodied in hardware, firmware, software, and combinations thereof, that enables communications among the various components of media content distribution system **14,** as well as between the media content distribution system **14** and wireless communication devices **12.** The communications module **108** may include the requisite hardware, firmware, software, and/or combinations thereof for establishing a wireless communication connection. According to described aspects, the communications module **108** may include the necessary hardware, firmware, and/or software to facilitate wireless broadcast, multicast and/or unicast communication of media content **18.**

The memory **102** of media content distribution system **14** includes a media content delivery module **16** operable to deliver media content **18** wirelessly across wireless network **20.** The media content delivery module **16** may provide for unicast delivery, broadcast delivery, multicast delivery or any other known or future known wireless delivery mechanism capable of wirelessly delivering the media content **18** across a wireless network **20.** Each item of media content **18** includes associated metadata **22** that provides for the media content to be associated with one or more media content categories. For example, if the media content is advertising content, the metadata may include information related to the type and/or sub-type of product or service being advertised and the like. The media content distribution system **14** may additionally include a media content delivery schedule **110,** such as a broadcast or multicast schedule for communicating the media content **18** to the wireless devices **12.** In one aspect, delivery of the media content **18** may occur asynchronously during those times at which the wireless device is characteristically in an off state, such as late at night or in the early morning hours. As such delivery of the content may trigger the wireless device to "wake-up" (i.e., power-up) to receive the broadcasted or multicasted media content. In other aspects, the wireless device may request delivery of media content **18** in accordance with unicast delivery or any other appropriate wireless delivery mechanism.

The media content delivery system **14** may also include a media content selection application updater **23** operable to define and communicate updates, revision, changes, or the like to the wireless device-side media content selection application **32** or any of the routines **34, 38,** and **40** within the application **32.** For example, the updater **23** may provide for adjusting any threshold within a routine **34, 38,** and **40,** changing the presentation frequency or schedule for any content chosen/targeted to be presented, changing where media content is to be presented/displayed within a corresponding client/application, overriding the application **32** or any routine **34, 38,** and **40** within the application for all of the content or any specific content item. In addition, the updater **32** may include an optimizer routine **25** that is operable to determine optimal conditions and/or adjustments for the media content selection application **32** and associated routines **34, 38,** and **40.** The updater **23** and/or optimizer routine **25** may base changes on business concerns, media content metadata, user profiles or the like. In this regard, the media content selection application can be dynamically changed adjusted, overridden or the like by the media content delivery system **14.**

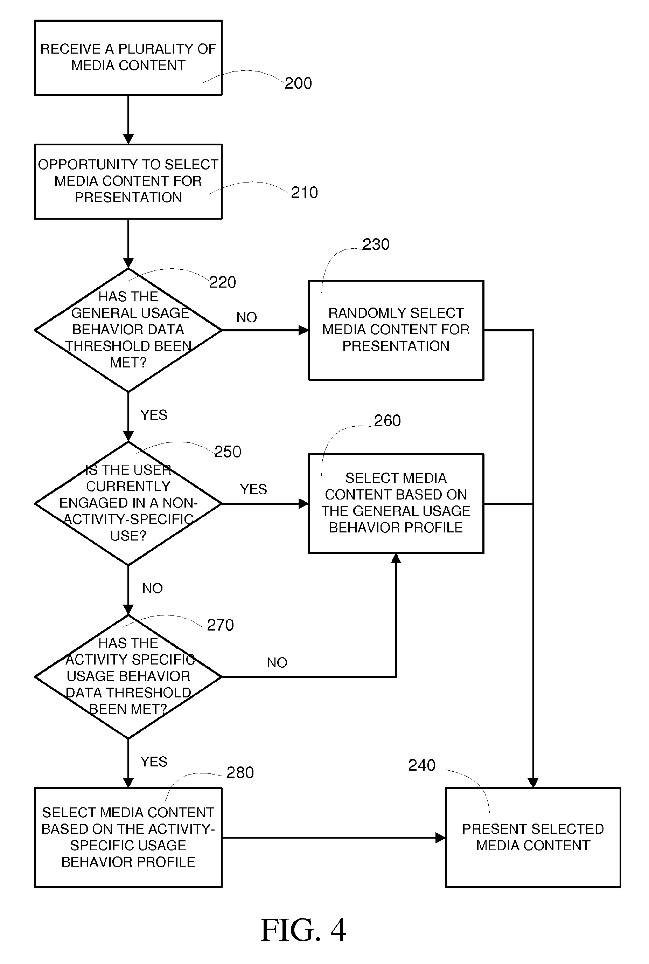

Referring to Fig. 4, a flow diagram is presented of a method for optimally presenting media content on a wireless device. At Event **200,** the wireless device receives a plurality of media content delivered wireless from a media content distribution system. The media content may be received through a broadcast or multicast of the media content initiated by the media content distribution system or, alternatively, the media content may be received at the request of the wireless device, such as by a unicast delivery or the like. At Event **210,** an opportunity occurs for media content presentation on the wireless device. The opportunity may occur based on user activity on the wireless device. For example, the user may navigate a network service client/portal that includes a predetermined area for media content, such as advertising content. Such predetermined area for advertising content is referred to as an advertising banner.

At Event **220,** the media content selection application determines if the general usage behaviour threshold has been met. The general usage behaviour threshold sets the minimal amount of general usage behaviour data/events needed for the application to rely on the general usage behaviour data to determine which media content to present. If the threshold has not been met, at Event **230,** the application will randomly select media content from amongst the plurality of received media content. Random selection of the media content may provide for use of a random number generator to choose from amongst the media content or, alternatively, a rotating presentation schedule may be implemented to present each of the media content items equally on a rotating basis. At Event **240,** the selected media content is presented on the wireless device according to a random selection or the equal distribution schedule. Presentation may include a visual display or the wireless device, an audio presentation on the wireless device, a multimedia display on the wireless device or any other type of presentation on the device.

If the general usage behaviour threshold has been reached or exceeded the media content selection application determines, at Event **250,** if the user is currently engaged in a non-activity-specific use. A non-activity-specific use is defined as a general use that is not associated with an activity-specific usage behaviour category in the user profile. If the use is determined to be non-activity specific then, at Event **260,** the application will select media content based on the general usage behaviour profile. In this regard, the application may select content for immediate presentation based on a general media content category of highest usage behaviour or the application may implement a frequency schedule that presents the media content according to the percentage of usage behaviour associated with the categories of media content. At Event **240,** the selected media is presented on the wireless device according to the selection process executed at Event **260.**

If the use is determined to be an activity-specific use then, at Event **270,** a determination is made as to whether the activity-specific threshold is met. Each activity designated for sub-profiling may have a usage behaviour threshold that sets the minimal amount of activity-specific usage behaviour data/events needed for the application to rely on the activity-specific usage behaviour data to determine which media content to present. If the activity specific threshold has not been met then, at Event **260** the application will select media content based on the general usage behaviour profile and, at Event **240,** the media content is presented.

If the activity-threshold is determined to have been met then, at Event **280,** the application will select media content based on the activity-specific usage behaviour sub-profile. In this regard, the application may select content for immediate presentation based on an activity specific media content category of highest usage behaviour or the application may implement a frequency schedule that presents the media content according to the percentage of activity-specific usage behaviour associated with the activity-specific categories of media content. At Event **240,** the selected media is presented on the wireless device according to the selection process executed at Event **280.**

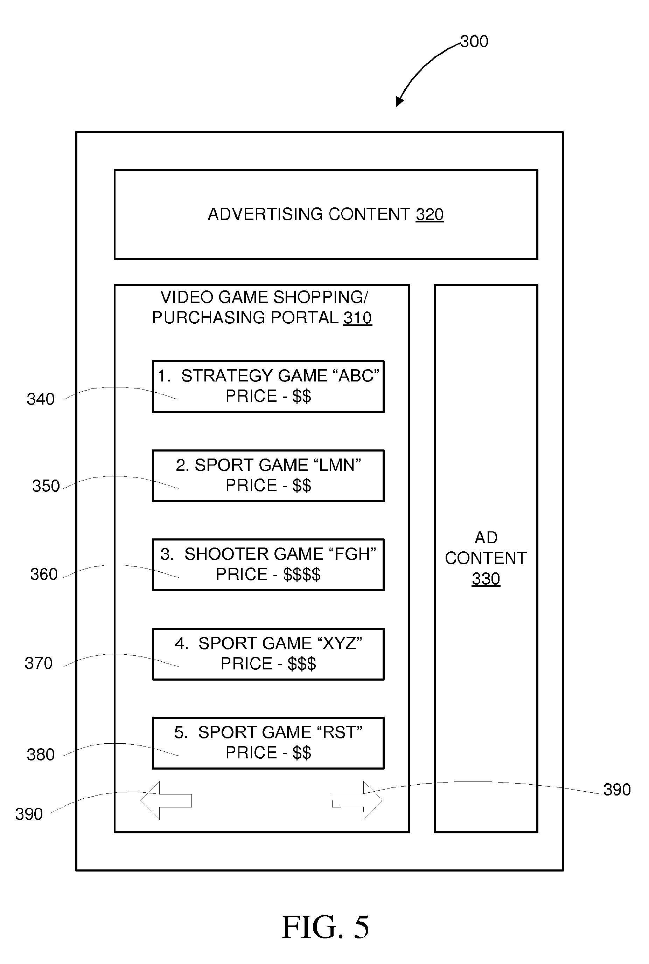

Referring to Figs. 5 - 9, examples of wireless device displays presenting optimized media content are shown, according to one or more aspects. Fig. 5 is an example of wireless device display **300** presenting data associated with a shopping/purchasing client, specifically a video game shopping/purchasing client. As such the display **300** includes a video game shopping/purchasing portal **310** and first and second media content presentation areas **320** and **330** designated for the presentation of advertising content, referred to as advertising banner areas. The advertising content presented in first and second media content presentation areas **320** and **330** are selected according to the media content selection application herein disclosed. The video game shopping/purchasing portal **310** includes five (5) video games available for purchase. Video game **340** is a strategy related video game entitled "ABC" and having an associated price "$$". Video game **350** is a sports related video game entitled "LMN" and having an associated price "$$". Video game **360** is a shooter related video game entitled "FGH" and having an associated price "$$$$". Video game **370** is a sports related video game entitled "XYZ" and having an associated price "$$$". Video game **380** is a strategy related video game entitled "RST" and having an associated price "$$". The shopping/purchasing portal **310** may also provide for the arrow icons **390** that inform the user of page scrolling capabilities.

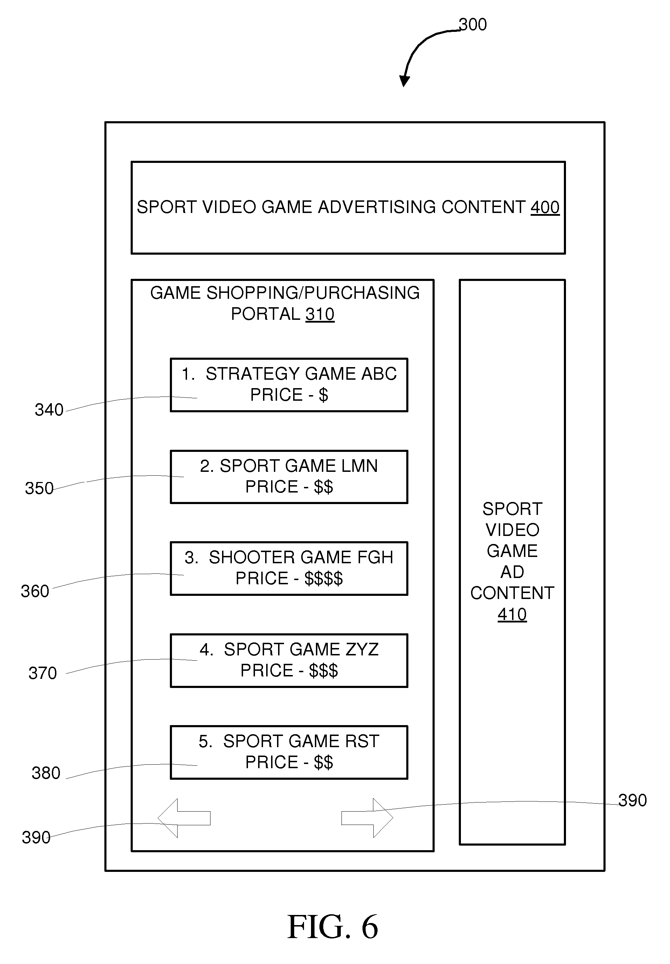

Fig. 6 is an example of the wireless device display **300** after first and second media content presentation areas **320** and **330** of Fig. 5 have been present with selected media content, specifically selected advertising content. Based on either the general usage behaviour profile or an activity-specific usage behaviour sub-profile, the media content selection application has selected that sport related video game advertising content **400** and **410** for presentation in media content presentation areas **320** and **330.**

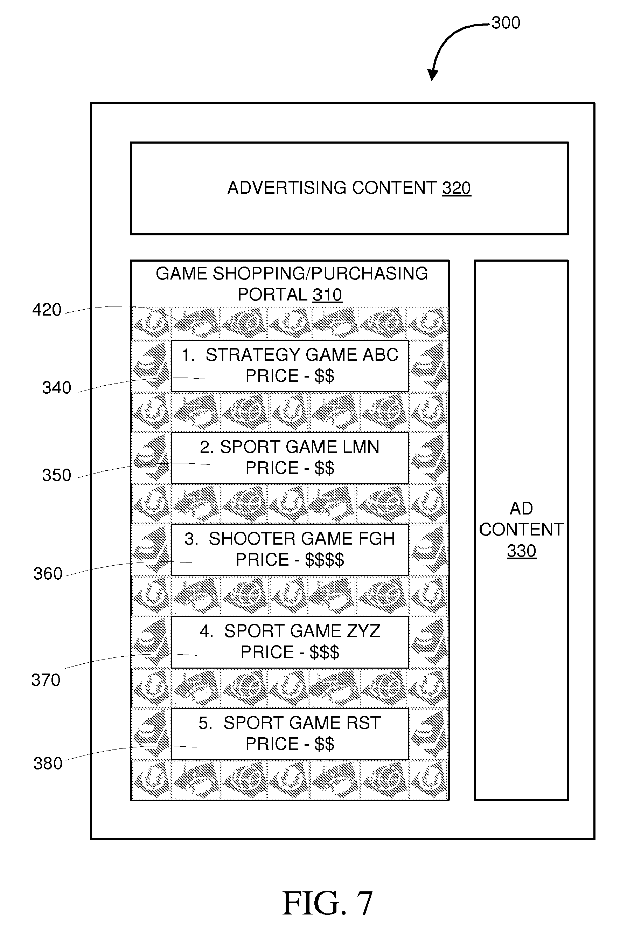

Referring to Fig. 7, an example of the wireless device display **300** in which the display appearance has been changed in accordance with usage behaviour is shown, according to one aspect. The background area **420** of the shopping/purchasing portal **310** has been changed to reflect characteristics of the highest percentage category or one of the highest percentage categories in either the general usage behaviour profile or an activity-specific usage sub-profile. In this instance, assuming that a video game usage behaviour sub-profile exists, the highest percentage of usage behaviour in the video game sub-profile is associated with a sports related category and, therefore, the background area **420** is changed in appearance to reflect a sports motif.

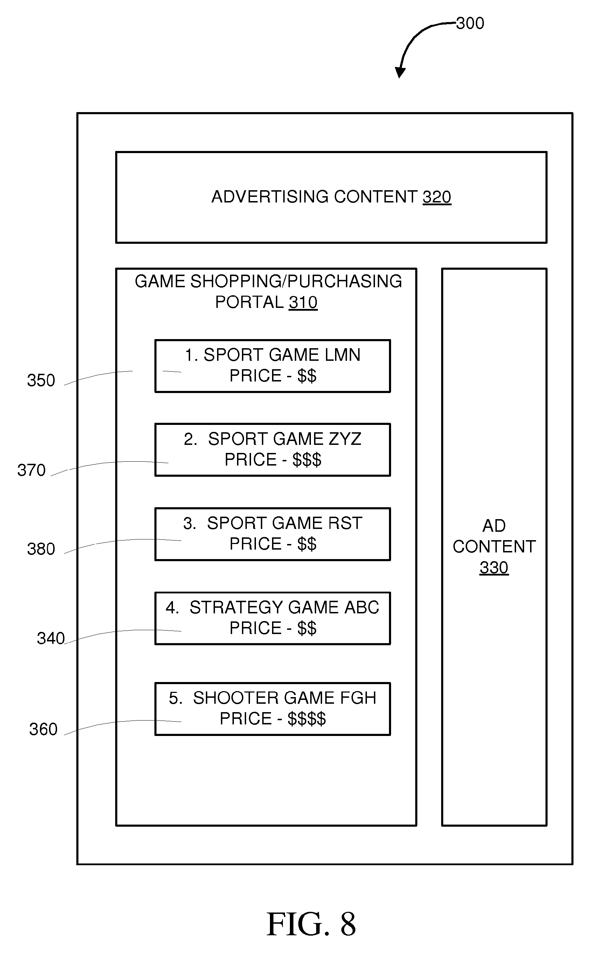

Referring to Fig. 8, an example of the wireless device display **300** in which the order of presentation of items in the shopping/purchasing portal **310** has been changed in accordance with usage behaviour is shown, according to one aspect. In the illustrated example of Fig. 8, the three (3) sports related video game items, **350, 370** and **380** are presented first based on usage data in the either the general usage behaviour profile or an associated activity-specific usage behaviour sub-profile. In this instance, sports related video games have the highest number or one of the highest number of entries or highest percentage or one of the highest percentages of entries in either the general usage behaviour profile or an associated activity-specific usage behaviour sub-profile.

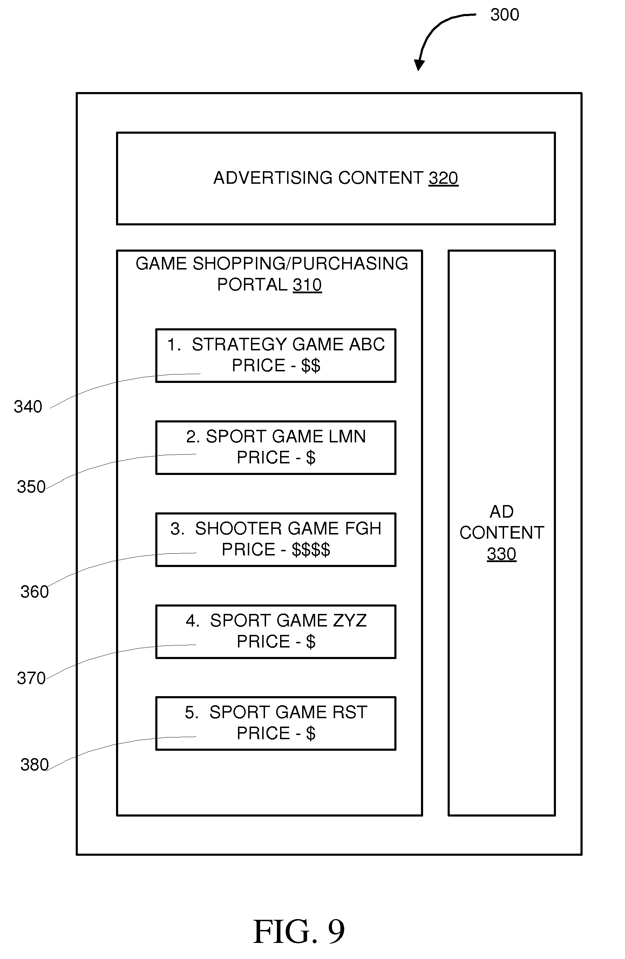

Referring to Fig. 9, an example of the wireless device display **300** in which price adjustments to items available on the shopping/purchasing portal **310** have been made based on usage behaviour is shown, according to one aspect. In the illustrated example of Fig. 9, the three (3) sports related video games **350, 370** and **380** have been adjusted, in comparison to Fig. 5, to reflect a lower price of "$". In this instance, sports related video games have the highest number or one of the highest number of entries or highest percentage or one of the highest percentages of entries in either the general usage behaviour profile or an associated activity-specific usage behaviour sub-profile and, thus a price change is made to entice the user's purchasing habits.

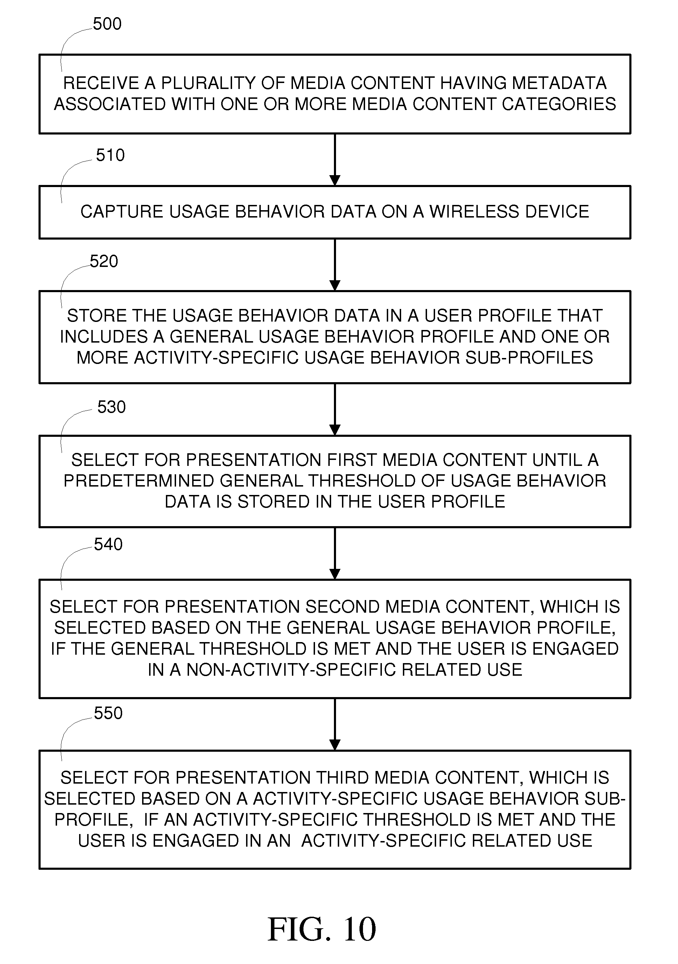

Fig. 10 is a flow diagram detailing a method for optimizing the selection of media content for presentation on a wireless device. At Event **500,** the wireless device receives a plurality of media content delivered wireless from a media content distribution system. The media content may be received through a broadcast or multicast of the media content initiated by the media content distribution system or, alternatively, the media content may be received at the request of the wireless device, such as by a unicast delivery or the like. At Event **510,** the wireless device captures usage behaviour data on the wireless device. The usage behaviour data may be associated with any user activity, such as accessing/executing an application/client, accessing a network service, accessing/executing content and the like.

At Event **520,** the captured usage behaviour data is stored in a user profile. The user profile includes a general usage behaviour profile and one or more activity-specific usage behaviour sub-profiles. As such, overall usage behaviour data is stored in the general usage behaviour profile and activity-specific usage behaviour data is stored in the associated activity-specific usage behaviour sub-profile.

At Event **530,** first media content from amongst the plurality of media content is selected for presentation until a predetermined general threshold of general usage behaviour data is stored in the general usage behaviour profile. The predetermined general threshold allows for an exemplary user behaviour profile to be established before the usage behaviour data is relied upon for selection of media content.

At Event **540,** second media content from amongst the plurality of media content is selected for presentation if the predetermined general threshold is met and the user is engaged in a non-activity-specific use. Selection of the second media content is based on the general usage behaviour profile. In one aspect, the second media content selection may compare the metadata associated with the received media content to usage behaviour data in the general usage behaviour profile to determine which media content item to present. In one aspect, media content having metadata in a media content category that has the highest amount of general usage behaviour data may be selected for immediate presentation. Alternatively, a presentation schedule or a frequency of presentation may be determined based on the categories of the media content, as defined by the metadata, and the amount of usage behaviour data associated with each category in the general usage behaviour profile. In this regard, media content that is associated with a category experiencing a high amount of usage behaviour is scheduled for more frequent presentation when the user is currently in a general use state and media content that is associated with a category experiencing a low amount of usage behaviour is scheduled for less frequent presentation when the user is currently in a general use state.

At Event **550,** third media content from amongst the plurality of media content is selected for presentation if a predetermined activity-specific threshold is met and the user is engaged in an activity-specific use. If the predetermined activity specific threshold is not met, the method may provide for selection of the third media content based on the general usage behaviour profile. If the activity-specific threshold is met and the user is engaged in an activity-specific use, selection of the third media content is based on the associated activity-specific usage behaviour sub-profile. As such, the third media content selection may rely on the associated activity-specific usage behaviour sub-profile to determine which media content from the plurality of media content to present. In one aspect, third media content selection may compare the metadata associated with the received media content to usage behaviour data in the activity-specific usage behaviour sub-profile to determine which media content item to present. In one aspect, media content having metadata in a media content category that has the highest amount of activity-specific usage behaviour data may be selected for immediate presentation. Alternatively, a presentation frequency schedule may be determined based on the categories of the media content, as defined by the metadata, and the amount of activity-specific behaviour data associated with each category in the activity specific usage behaviour sub-profile. In this regard, media content that is associated with a category experiencing a high amount of activity specific usage behaviour is schedule for more frequent presentation when the user is currently in an activity-specific use state and media content that is associated with a category experiencing a low amount of activity specific usage behaviour is scheduled for less frequent presentation when the user is currently in an activity-specific use state.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

While the foregoing disclosure shows illustrative aspects and/or embodiments, it should be noted that various changes and modifications could be made herein without departing from the scope of the described aspects and/or embodiments as defined by the appended claims. Furthermore, although elements of the described embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

Thus, present aspects provide for methods, devices, systems, and computer program products for optimizing the presentation of media content, such as advertising content, on a wireless device. The present aspects provide for determining, at the wireless device, which media content to present based on historical user usage behaviour stored locally on the wireless device. In this regard, the described methods, apparatus and systems are completely wireless-device based and, as such, do not require for back-end servers or other network devices to intervene in deciding what media content should be communicated to the wireless device and/or presented on the wireless device. The described methods, apparatus and systems are less complex in terms of computational requirements than conventional targeting applications and, as such, are especially suited for those wireless devices with slower processing capabilities. Therefore, the present aspects provide for a simple and cost effective approach to targeted media content presentation that additionally affords the wireless device user a level of privacy.

Many modifications and other aspects will come to mind to one skilled in the art to which this invention pertains having the benefit of the teachings presented in the foregoing descriptions and the associated drawings. Therefore, it is to be understood that the aspect is not to be limited to the specific aspects disclosed and that modifications and other aspects are intended to be included within the scope of the appended claims. Although specific terms are employed herein, they are used in a generic and descriptive sense only and not for purposes of limitation. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method for optimizing the presentation of media content on a wireless communication device, the method comprising:
receiving a plurality of media content having metadata associated with one or more media content categories;
capturing usage behaviour data on the wireless device;
storing the usage behaviour data in a user profile that includes a general usage behaviour profile and one or more activity-specific usage behaviour sub-profiles;
selecting, for presentation, first media content from the plurality of media content, wherein the first media content is randomly selected until a predetermined threshold of usage behaviour data is stored in the user profile;
selecting, for presentation, second media content from the plurality of media content if a predetermined general threshold is met and a user is currently engaged in non-activity-specific related use, wherein the second media content is selected based on the general usage behaviour profile; and
selecting, for presentation, third media content from the plurality of media content if a predetermined activity-specific threshold is met and the user is currently engaged in an activity-specific related use, wherein the third media content is selected based on an activity-specific usage behaviour sub-profile.

2. The method of claim 1, wherein capturing usage behaviour data further comprises capturing usage behaviour data chosen from the group consisting of type of network services accessed, type of applications accessed, type of content accessed, frequency of accessing a network service, frequency of accessing an application, and frequency of accessing a content item

3. The method of claim 1, wherein capturing usage behaviour data on the wireless device further comprises capturing usage behaviour data corresponding to an activity used to generate an activity-specific usage behaviour sub-profile.

4. The method of claim 1, wherein selecting, for presentation, second media content from the plurality of media content further comprises determining a schedule for presenting each of the plurality of media content based on the general usage behaviour profile.

5. The method of claim 4, wherein determining a schedule for presenting each of the plurality of media content further comprises determining a frequency for presenting content media items having metadata of a specific media content category based upon a frequency of occurrence of usage behaviour related to the specific media content category as determined from the general usage behaviour profile.

6. The method of claim 1, wherein selecting, for presentation, third media content from the plurality of media content further comprises determining a schedule for presenting each of the plurality of media content having metadata associated with the current use, based on a related activity-specific usage behaviour sub-profile.

7. The method of claim 4, wherein determining a schedule for presenting each of the plurality of media content having metadata associated with the current use further comprises determining a frequency for presenting media items having metadata associated with the current use based upon a frequency of occurrence of usage behaviour related to the current use as determined from the activity-specific usage behaviour sub-profile.

8. The method of claim 1, further comprising selecting, for presentation, a display appearance for the non-activity specific use based on the user profile.

9. The method of claim 1, further comprising selecting, for presentation, a display appearance for the non-activity specific use based on the general usage behaviour profile.

10. The method of claim 1, further comprising selecting, for presentation, a display appearance for the non-activity specific use based on a geographic location of the wireless device.

11. The method of claim 1, further comprising selecting, for presentation, a display appearance for the activity-specific related use based on the activity-specific usage behaviour sub-profile.

12. The method of claim 1, wherein receiving a plurality of media content further comprises receiving a plurality of advertising content.

13. The method of claim 12, wherein storing usage behaviour data in a user profile that includes a general usage behaviour profile and one or more activity-specific usage behaviour sub-profiles further defines the one or more activity specific usage profiles as a purchasing user behaviour sub-profile.

14. The method of claim 12, wherein selecting, for presentation, third media content further comprises selecting, for presentation, third advertising content from the plurality of advertising content if the predetermined threshold is met and the user is currently engaged in navigating a purchasing portal, wherein the third advertising content is selected based on a purchasing usage behaviour sub-profile.

15. The method of claim 14, further comprising selecting an order of presentation for items available on the purchasing portal based on the purchasing usage behaviour sub-profile.

16. The method of claim 14, further comprising selecting, for presentation, a display appearance for the purchasing portal based on the user profile.

17. The method of claim 14, further comprising selecting, for presentation, a display appearance for the purchasing portal based on the purchasing usage behaviour sub-profile.

18. The method of claim 14, further comprising selecting, for presentation, a display appearance for the purchasing portal based on a geographic location of the wireless device.

19. The method of claim 14, further comprising selecting a price for items available on the purchasing portal based on the purchasing usage behaviour sub-profile.

20. The method of claim 1, further comprising receiving, from a network entity, adjustments to criteria for selecting, for presentation, at least one of the first media content, the second media content and the third media content.

21. The method of claim 20, wherein receiving, from a network entity, adjustments to criteria for selecting further defines the adjustments to criteria as chosen from the group consisting of changes to the predetermined general threshold, changes to the predetermined activity-specific threshold, adjusting a frequency of presentation for selected media content, adjusting a presentation schedule for selected media content, overriding the selection process for all of the plurality media content, and overriding the selection process for predetermined media content.

22. At least one processor configured for optimizing presentation of media content on a wireless communication device, the processor comprising:
a first module for receiving a plurality of media content having metadata associated with one or more media content categories;
a second module for capturing usage behaviour data on the wireless device;
a third module for storing the usage behaviour data in a user profile that includes a general usage behaviour profile and one or more activity-specific usage behaviour sub-profiles;
a fourth module for selecting, for presentation, first media content from the plurality of media content, wherein the first media content is randomly selected until a predetermined threshold of usage behaviour data is stored in the user profile;
a fifth module for selecting, for presentation, second media content from the plurality of media content if the predetermined threshold is met and a user is currently engaged in non-activity-specific related use, wherein the second media content is selected based on the general usage behaviour profile; and
a sixth module for selecting, for presentation, third media content from the plurality of media content if the predetermined threshold is met and the user is currently engaged in an activity-specific related use, wherein the third media content is selected based on an activity-specific usage behaviour sub-profile.

23. A computer program product, comprising:
a computer-readable medium comprising:
at least one instruction for causing a computer to receive a plurality of media content having metadata associated with one or more media content categories;
at least one instruction for causing the computer to capture usage behaviour data on the wireless device;
at least one instruction for causing the computer to store the usage behaviour data in a user profile that includes a general usage behaviour profile and one or more activity-specific usage behaviour sub-profiles;
at least one instruction for causing the computer to select for presentation first media content from the plurality of media content, wherein the first media content is randomly selected until a predetermined threshold of usage behaviour data is stored in the user profile;
at least one instruction for causing the computer to select for presentation second media content from the plurality of media content if the predetermined threshold is met and a user is currently engaged in non-activity-specific related use, wherein the second media content is selected based on the general usage behaviour profile; and
at least one instruction for causing the computer to select for presentation third media content from the plurality of media content if the predetermined threshold is met and the user is currently engaged in an activity-specific related use, wherein the third media content is selected based on an activity-specific usage behaviour sub-profile.

24. A wireless communication apparatus, comprising:
means for receiving a plurality of media content having metadata associated with one or more media content categories;
means for capturing usage behaviour data on the wireless device;
means for storing usage behaviour data in a user profile that includes a general usage behaviour profile and one or more activity-specific usage behaviour sub-profiles;
means for selecting, for presentation, first media content from the plurality of media content, wherein the first media content is randomly selected until a predetermined threshold of usage behaviour data is stored in the user profile;
means for selecting, for presentation, second media content from the plurality of media content if the predetermined threshold is met and the user is currently engaged in non-activity-specific related use, wherein the second media content is selected based on the general usage behaviour profile; and
means for selecting, for presentation, third media content from the plurality of media content if the predetermined threshold is met and the user is currently engaged in an activity-specific related use, wherein the third media content is selected based on an activity-specific usage behaviour sub-profile.

25. A wireless communication device, the device comprising:
a computer platform including at least one processor and a memory;
a usage behaviour capture application stored in the memory and executable by the at least one processor, wherein the usage behaviour application is operable to collect usage behaviour data and store, in the memory, the data in a user profile that includes a general usage behaviour profile and one or more activity-specific usage behaviour sub-profiles; and
a media content selection application stored in the memory and executable by the at least one processor, wherein the media content application is operable to receive a plurality of media content having metadata associated with one or more media content categories and to select media content for presentation based on a media content selection routine including,
a first media content selection routine operable to select for presentation first media content from the plurality of media content, wherein the first media content is randomly selected until a predetermined threshold of usage behaviour data is stored in the user profile;
a second media content selection routine operable to select, for presentation, second media content from the plurality of media content if the predetermined threshold is met and the user is currently engaged in non-activity-specific related use, wherein the second media content is selected based on the general usage behaviour profile; and
a third media content selection routine operable to select, for presentation, third media content from the plurality of media content if the predetermined threshold is met and the user is currently engaged in an activity-specific related use, wherein the third media content is selected based on an activity-specific usage behaviour sub-profile.

26. The device of claim 25, wherein usage behaviour capture application is further operable to capture usage behaviour data chosen from the group consisting of type of network services accessed, type of applications accessed, type of content accessed, frequency of accessing a network service, frequency of accessing an application, and frequency of accessing a content item

27. The device of claim 25, wherein the usage behaviour capture application is further operable to capture usage behaviour data corresponding to an activity used to generate an activity-specific usage behaviour sub-profile.

28. The device of claim 25, wherein the second media content selection routine is further operable to determine a schedule for presenting each of the plurality of media content based on the general usage behaviour profile.

29. The device of claim 28, wherein the second media content selection routine is further operable to determine a frequency for presenting media items having metadata of a specific media content category based upon a frequency of occurrence of usage behaviour related to the specific media content category as determined from the general usage behaviour profile

30. The device of claim 25, wherein the third media content selection routine is further operable to determine a schedule for presenting each of the plurality of media content having metadata associated with the current use, based on a related activity-specific usage behaviour sub-profile.

31. The device of claim 30, wherein the third media content selection routine is further operable to determine a frequency for presenting media items having metadata associated with the current use based upon a frequency of occurrence of usage behaviour related to the current use as determined from the related activity-specific usage behaviour sub-profile.

32. The device of claim 25, further comprising a display appearance selection routine operable to select for presentation a display appearance for the non-activity specific use based on the user profile.

33. The device of claim 32, wherein the display appearance selection routine is further operable to select for presentation a display appearance for the non-activity specific use based on the general usage behaviour profile.

34. The device of claim 32, wherein the display appearance selection routine is further operable to select for presentation a display appearance for the non-activity specific use based on a geographic location of the wireless device.

35. The device of claim 32, wherein the display appearance selection routine is further operable to select for presentation a display appearance for the activity-specific related use based on the activity-specific usage behaviour sub-profile.

36. The device of claim 25, wherein the media content selection application further comprises an advertising content selection application operable to receive a plurality of advertising content.

37. The device of claim 36, wherein the usage behaviour capture application operable to collect usage behaviour data and store the data in a user profile that includes a general usage behaviour profile and one or more activity-specific usage behaviour sub-profiles further defines the activity-specific usage behaviour sub-profile as a purchasing user behaviour sub-profile.

38. The device of claim 36, wherein the third media content selection routine is further operable to select for presentation third advertising content from the plurality of advertising content if the predetermined threshold is met and the user is currently engaged in navigating a purchasing portal, wherein the third advertising content is selected based on a purchasing usage behaviour sub-profile.

39. The device of claim 38, further comprising a purchasing selection routine operable to select an order of presentation for items available on the purchasing portal based on the purchasing usage behaviour sub-profile.

40. The device of claim 38, further comprising a purchasing selection routine operable to select a price for items available on the purchasing portal based on the purchasing usage behaviour sub-profile.

41. The device of claim 38, further comprising a display appearance selection routine operable for selecting, for presentation, a display appearance for the purchasing portal based on the user profile.

42. The device of claim 38, further comprising a display appearance selection routine operable for selecting, for presentation, a display appearance for the purchasing portal based on the purchasing usage behaviour sub-profile.

43. The device of claim 38, further comprising a display appearance selection routine operable for selecting, for presentation, a display appearance for the purchasing portal based on a geographic location of the wireless device.

44. The device of claim 25, wherein the media content selection application is further operable to dynamically receive adjustments to the application from a network entity.

45. The device of claim 44, wherein the media content selection application is further operable to receive adjustments chosen from the group consisting of changes to the predetermined general threshold, changes to the predetermined activity-specific threshold, adjusting a frequency of presentation for selected media content, adjusting a presentation schedule for selected media content, overriding the selection process for all of the plurality media content and overriding the selection process for predetermined media content.

46. A method for providing a wireless communication device media content and providing dynamic adjustments to a wireless device-based media content selection application, comprising:
providing, wirelessly, a plurality of media content to one or more wireless communication devices, wherein upon receipt, the wireless device is operable to:
implement media content selection application that is operable to select for presentation first media content from the media content, wherein the first media content is randomly selected until a predetermined general threshold of usage behaviour data is stored in the user profile;
select, for presentation, second media content from the plurality of media content if the predetermined general threshold is met and a user is currently engaged in non-activity-specific related use, wherein the second media content is selected based on the general usage behaviour profile; and
Select, for presentation, third media content from the plurality of media content if a predetermined activity-specific threshold is met and the user is currently engaged in an activity-specific related use, wherein the third media content is selected based on an activity-specific usage behaviour sub-profile; and
providing, wirelessly, dynamic adjustments to the media content selection application.

47. The method of claim 46, wherein providing, wirelessly, dynamic adjustments to the media content selection application further comprises executing an optimization routine to determine optimal dynamic adjustments to the media content selection application.

48. The method of claim 46, wherein providing, wirelessly, dynamic adjustments to the media content selection application further defines the dynamic adjustments as chosen from the group consisting of changes to the predetermined general threshold, changes to the predetermined activity-specific threshold, adjusting a frequency of presentation for selected media content, adjusting a presentation schedule for selected media content, overriding the selection process for all of the plurality media content, and overriding the selection process for predetermined media content.

49. At least one processor configured for communicating media content to a wireless device and dynamically adjusting the selection application on the wireless device, the processor comprising:
a first module for providing, wirelessly, a plurality of media content to one or more wireless communication devices, wherein upon receipt the wireless device is operable to:
implement media content selection application that is operable to select for presentation first media content from the media content, wherein the first media content is randomly selected until a predetermined general threshold of usage behaviour data is stored in the user profile;
select, for presentation, second media content from the plurality of media content if the predetermined general threshold is met and a user is currently engaged in non-activity-specific related use, wherein the second media content is selected based on the general usage behaviour profile; and
Select, for presentation, third media content from the plurality of media content if a predetermined activity-specific threshold is met and the user is currently engaged in an activity-specific related use, wherein the third media content is selected based on an activity-specific usage behaviour sub-profile; and
a second module for providing, wirelessly, dynamic adjustments to the media content selection application.

50. A computer program product, comprising:
a computer-readable medium comprising:
at least one instruction for causing a computer to provide, wirelessly, a plurality of media content to one or more wireless communication devices, wherein upon receipt the wireless device is operable to:
implement media content selection application that is operable to select for presentation first media content from the media content, wherein the first media content is randomly selected until a predetermined general threshold of usage behaviour data is stored in the user profile;
select, for presentation, second media content from the plurality of media content if the predetermined general threshold is met and a user is currently engaged in non-activity-specific related use, wherein the second media content is selected based on the general usage behaviour profile; and
select, for presentation, third media content from the plurality of media content if a predetermined activity-specific threshold is met and the user is currently engaged in an activity-specific related use, wherein the third media content is selected based on an activity-specific usage behaviour sub-profile; and
at least one instruction for causing the computer to provide, wirelessly, dynamic adjustments to the media content selection application.

51. A network media content delivery system, comprising:
means for providing, wirelessly, a plurality of media content to one or more wireless communication devices, wherein upon receipt the wireless device is operable to:
implement media content selection application that is operable to select for presentation first media content from the media content, wherein the first media content is randomly selected until a predetermined general threshold of usage behaviour data is stored in the user profile;
select, for presentation, second media content from the plurality of media content if the predetermined general threshold is met and a user is currently engaged in non-activity-specific related use, wherein the second media content is selected based on the general usage behaviour profile; and
Select, for presentation, third media content from the plurality of media content if a predetermined activity-specific threshold is met and the user is currently engaged in an activity-specific related use, wherein the third media content is selected based on an activity-specific usage behaviour sub-profile; and
means for providing, wirelessly, dynamic adjustments to the media content selection application.

52. A media content delivery system, the system comprising:
a media content delivery module operable to wirelessly deliver a plurality of media content to one or more wireless communication devices, wherein upon receipt the wireless device is operable to:
implement media content selection application that is operable to select for presentation first media content from the media content, wherein the first media content is randomly selected until a predetermined general threshold of usage behaviour data is stored in the user profile;
select, for presentation, second media content from the plurality of media content if the predetermined general threshold is met and a user is currently engaged in non-activity-specific related use, wherein the second media content is selected based on the general usage behaviour profile; and
Select, for presentation, third media content from the plurality of media content if a predetermined activity-specific threshold is met and the user is currently engaged in an activity-specific related use, wherein the third media content is selected based on an activity-specific usage behaviour sub-profile; and
a media content selection application updater operable to dynamically provide adjustments to the media content delivery application executed at the one or more wireless devices.

53. The media content delivery system of claim 52, wherein the media content selection application updater further comprises an optimizer routine operable for dynamically determining optimal adjustments for the media content selection application.

54. The media content delivery system of claim 52, wherein the media content selection application updater is further operable to provide dynamic adjustments to the media content selection application, wherein the adjustments are chosen from the group consisting of changes to the predetermined general threshold, changes to the predetermined activity-specific threshold, adjusting a frequency of presentation for selected media content, adjusting a presentation schedule for selected media content, overriding the selection process for all of the plurality media content, and overriding the selection process for predetermined media content.
